# EUROPEAN PATENT APPLICATION

(11) **EP 2 334 036 A1**
(43) Date of publication of application: **15.06.2011**
(21) Application number: 09252716.7
(22) Date of filing: 02.12.2009
(51) Int. Cl.: H04L 29/08

(54) **Monitoring appartus and method**

(71) Applicant: Tsuen Shing Enterprises Limited, Hong Kong (HK)
(72) Inventor: Peng, Bo, Cheung Sha Wan Kowloon Hong Kong (CN); Quan, Ci Kun, Sha Wan Kowloon Hong Kong (CN); Wong, Hung Chit, Cheung Sha Wan Kowloon Hong Kong (CN)
(74) Representative: Martin, David John

(57) **Abstract**

A monitoring apparatus is disclosed as including a digital wireless camera (10) with an image capture device (30) for capturing images and converting the images into digital visual data, a data processing module (48) for processing the visual data, and a wireless module (46) for wirelessly transmitting data processed by the data processing unit, and a wireless universal serial bus (USB) receiver (12) connectable with a USB terminal (14) of a computer system (16) for data communication, and the wireless USB receiver can wirelessly receive data transmitted by the wireless module.

## Description

This invention relates to a monitoring apparatus and method and in particular such an apparatus and method allowing an environment (and/or objects or individuals in the environment) to be at least visually monitored over the Internet.

There are in existence various monitoring apparatus and systems allowing a user remote from a location to visually monitor the location, or an object or an individual in the location which is of interest to him/her. For example, a parent away from home (e.g. at work, or travelling abroad) may wish to be able to monitor his/her baby sleeping at home. In some existing apparatus and systems, a camera may be positioned adjacent the baby, and images captured by the camera are transmitted by a data wire to a data processing apparatus (e.g. a computer) which is connected with the Internet. A user may then connect, with another data processing apparatus (such as a computer, a personal data assistant (PDA) or mobile phone with Internet connection capability), with the computer *via* the Internet so as to obtain the visual data for viewing.

A problem associated with such conventional apparatus and systems is that images captured by the camera have to be transmitted to the computer by a data wire, which is usually relatively short. However, there may not be sufficient space in or around the location for accommodating the computer. If, on the other hand, the computer is situated too far away from the camera, a long data line is required which makes connection inconvenient and may be dangerous as someone may trip over it.

It is thus an object of the present invention to provide a monitoring apparatus, a monitoring system and a monitoring method in which the aforesaid shortcoming is mitigated, or at least to provide a useful alternative to the public.

According to a first aspect of the present invention, there is provided a monitoring apparatus including at least one image capturing unit for capturing at least one image and converting said at least one image into visual data, at least a first data processing unit for processing said visual data, and at least a first wireless unit for wirelessly transmitting data processed by said first data processing unit, characterized in including at least one wireless universal serial bus (USB) receiver connectable with a USB terminal of a data processing apparatus for data communication, and that said wireless USB receiver is adapted to wirelessly receive data transmitted by said first wireless unit.

According to a second aspect of the present invention, there is provided a monitoring system including at least one monitoring apparatus including at least one image capturing unit for capturing at least one image and converting said at least one image into visual data, at least a first data processing unit for processing said visual data, at least a first wireless unit for wirelessly transmitting data processed by said first data processing unit, at least a first data processing apparatus with Internet connection capability and with at least one universal serial bus (USB) terminal, characterized in including at least one wireless universal serial bus (USB) receiver connected with said USB terminal of said first data processing apparatus for data communication, and that said wireless USB receiver is adapted to wirelessly receive data transmitted by said first wireless unit.

According to a third aspect of the present invention, there is provided a monitoring method, including (a) capturing at least one image of a location, object or individual, (b) converting said image into visual data, (c) processing said visual data, and (d) wirelessly transmitting said data after being processed in said step (c), characterized in (e) wirelessly receiving said data by a wireless universal serial bus (USB) receiver connected with a USB terminal of a first data processing apparatus for data communication.

It should be noted that the various units may or may not be discrete from one another. For example, while each unit may be discrete from other units, it is also envisaged that some components or circuitry may serve more than one unit, which means that some units may share common components or circuitry. It is also envisaged that more than one units may be comprised in a single integrated circuit or chip.

Embodiments of monitoring apparatus, systems and method according to the present invention will now be described, by way of examples only, with reference to the accompanying drawings, in which:
Fig. 1 is a schematic diagram of a monitoring system according to a first embodiment of the present invention;
Fig. 2 is a schematic diagram showing the flow of data in the monitoring system of Fig. 1;
Fig. 3 is a further schematic diagram showing further details of the wireless camera and the USB receiver of Fig. 1;
Fig. 4 is a schematic diagram of a monitoring system according to a second embodiment of the present invention; and
Fig. 5 is a further schematic diagram showing a manner of connection between the monitoring system of Fig. 1 and a client or a mobile client.

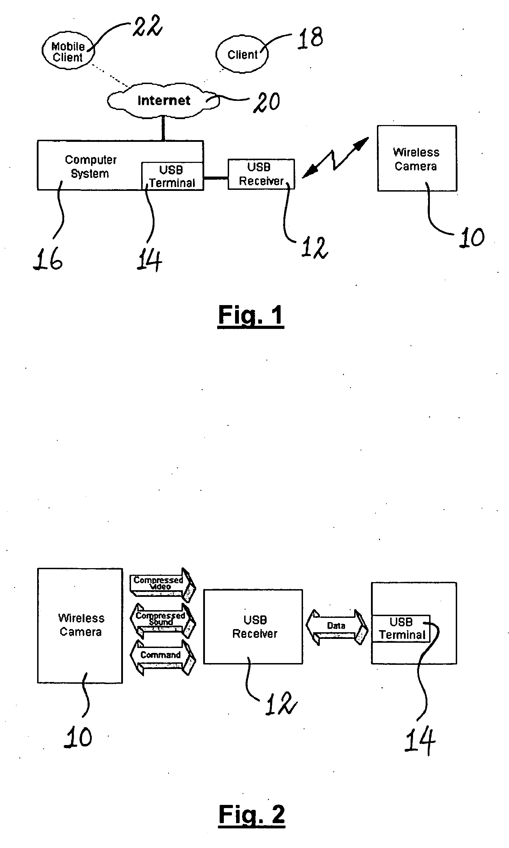

As shown in Fig. 1, a monitoring system according to a first embodiment of the present invention includes a wireless digital camera 10, a universal serial bus (USB) receiver 12 connected with a USB terminal/port 14 of a computer system 16 with Internet connection capability. The computer system 16 may be a desktop computer, a laptop computer, a notebook computer or a handheld computer. A client 18 (which may be a desktop computer or a laptop computer) with Internet connection capability may access the Internet 20 and obtain the data from the computer system 16 or send instructions to the wireless camera 10 (in a manner to be discussed below). Alternatively, a mobile client 22 (which may be a mobile phone or mobile personal digital assistant (PDA)) with Internet connection capability may access the data from the computer system 16 *via* the Internet or send instructions to the wireless camera 10 (in a manner to be discussed below). It is also possible to obtain and output the various data obtained from the wireless camera 10 on the computer system 16, and to send instructions to the wireless camera 10 by operating the computer system 16.

The wireless digital camera 10 can capture images (in the form of still pictures or videos) and sound of the surrounding environment, convert the captured images and sound into visual and audio data, and compress the data. As shown in Fig. 2, the processed and compressed visual and/or audio data and other relevant data and signals (to be further discussed below) are then wirelessly transmitted by the camera 10. Such wirelessly transmitted data are wirelessly received by the USB receiver 12, and subsequently transferred to the computer system 16 *via* the USB terminal/plug 14 of the computer system 16 with which the USB receiver 12 is connected. The flow of data between the USB receiver 12 and the camera 10 is two-way, in the sense that command data and audio data may also be wirelessly transmitted by the USB receiver 12 and received by the camera 10. Similarly, data (e.g. command data) from the computer system 16 may be transmitted to the USB receiver 12. *via* the USB terminal 14.

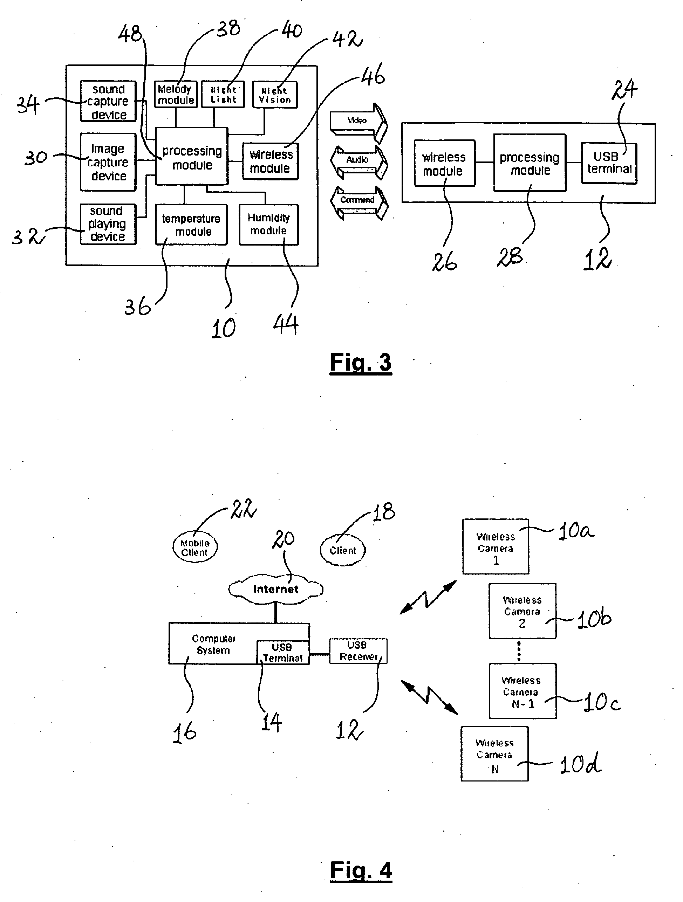

As shown in Fig. 3, the USB receiver 12 includes a USB terminal/plug 24 for physical connection with the USB terminal/plug 14 of the computer system 16 for two-way data communication. The USB receiver 12 also has a wireless module 26 for wireless transmission and reception of data. It is thus a wireless transceiving unit. The wireless module 26 can modulate the received data by an analog modulation method or digital modulation method. Common analog modulation methods which may be used include amplitude modulation (AM) and angle modulation. Common digital modulation methods which may be used include phase-shift keying (PSK), frequency-shift keying (FSK), amplitude-shift keying (ASK), on-off keying (OOK), quadrature amplitude modulation (QAM) (which is a combination of PAK and ASK), continuous phase modulation (CPM), orthogonal frequency division multiplexing (OFDM) modulation, wavelet modulation, trellis coded modulation (TCM) and spread-spectrum techniques. The USB receiver 12 also includes a data processing module 28 for controlling the operation of and flow of data within the USB receiver 12.

It can also be seen that the wireless digital camera 10 has an image capture device 30, a sound playing device 32, a sound capture device 34, a temperature module 36, a melody module 38, a night light device 40, a nigh vision device 42, a humidity module 44, a wireless module 46, and a data processing module 48. The various devices and modules in the wireless digital camera 10 are connected with the data processing module 48, so as to allow the data processing module 48 to control the operation of and flow of data within the camera 10.

Visual images (in the form of still pictures or videos) captured by the image capture device 30 are transmitted to the data processing module 48 for processing. If the images are already converted by the image capture device 30 into digital visual data, the data processing module 48 would then compress these data. If, on the other hand, the visual data from the image capture device 30 are in analog form, the data processing module 48 will convert the analog visual data into digital visual data and compress them. Such processed data are then passed to the wireless module 46 for modulation and subsequent wireless transmission. As in the case of the wireless module 26 discussed above, the wireless module 46 can also modulate the received data by an analog modulation method or digital modulation method.

Similarly, sound captured by the sound capture device 34 are transmitted to the data processing module 48 for processing (e.g. conversion into digital sound data and compression), and the processed audio data are then passed to the wireless module 46 for modulation and subsequent wireless transmission. The sound capture device 34 is an acoustic-to-electric transducer or sensor that converts sound into an electrical signals, e.g. a microphone.

In addition to visual and audio data, other data may also be wirelessly transmitted by the camera 10. Such data may relate to the temperature and humidity of the environment surrounding the camera 10. In particular, the temperature module 36 detects the ambient temperature of the surrounding environment. The temperature module 36 may include a temperature sensitive element or a negative temperature coefficient (NTC) thermistor. In addition, the humidity module 44 includes a humidity sensitive element which detects the humidity of the surrounding environment. Data obtained by the temperature module 36 and humidity module 44 are similarly passed to the data processing module 48 for processing, and then passed to the wireless module 46 for modulation and subsequent wireless transmission.

Data passed by the data processing module 48 to the wireless module 46 are (after modulation) wirelessly transmitted by the wireless module 46 and wirelessly received by the wireless module 26 of the USB receiver 12. Such received data are then passed to the data processing module 28 for processing (e.g. de-compression), and then transferred to the computer system 16 with which the USB receiver 12 is physically connected for data communication *via* the coupling of the USB terminal/plug 24 of the USB receiver 12 and the USB terminal/plug 14 of the computer system 16. The computer system 16 is connected with the Internet 20, and the client 18 or mobile client 22 may, with suitable password or the like, connect with the computer system 16 *via* the Internet so as to obtain the data transferred from the USB receiver 12.

It can be seen from Fig. 3 that command data and audio data may be transmitted by the USB receiver 12 to the camera 10. In particular, the client 18 or mobile client 22 may speak to a microphone (not shown) on the computer system or mobile device (with Internet connection capability). The sound captured by the microphone is then converted into electrical signals and then digital data, sent to the computer system 16 *via* the Internet 20, then passed to the USB receiver 12, processed by the data processing module 28, modulated and then subsequently wirelessly transmitted by the wireless module 26. Such wirelessly transmitted audio data are then received by the wireless module 46 (which thus acts as a wireless transceiver), passed to the data processing module 48 for further processing (e.g. for decompression), and then passed to the sound playing device 32 (which may be an electric-to-acoustic transducer, e.g: a speaker) for playing. Alternatively, the user may issue instructions, which are transmitted from his/her own data processing apparatus *via* the Internet 20 to the computer system 16, *via* the USB terminal/plug 14 to the USB receiver 12, and then wirelessly, through the wireless module 46, to the data processing module 48 of the camera 10. The data processing module 48 then directs a melody module 38 to transmit data representing a song or a tune to the sound playing device 32 for playing. The user may thus try to remotely sooth a crying baby adjacent the camera 10.

In addition, the camera 10 has a night light device 40 controlled by the data processing module 48. If the environment surrounding the camera 10 is not bright enough, the client 18 or mobile client 22 may issue instructions (which are transmitted in like manner as discussed above) to the data processing module 48, causing it to send instructions to activate the night light device 40, which may be an electric-to-light transducer, e.g. a light bulb or light-emitting diode (LED).

The camera 10 also has a night vision device 42 controlled by the data processing module 48. Again, If the environment surrounding the camera 10 is not bright enough, but the client 18 or mobile client 22 does not want to wake up the baby by activating the night light device 40, he/she may issue instructions (which are transmitted in like manner as discussed above) to the data processing module 48, causing it to send instructions to activate the night vision device 42, which may be a non-visual electric-to-light transducer, e.g. an infrared (IR) light-emitting diode.

It can be seen from the foregoing that the wireless data communication between the wireless module 26 of the USB receiver 12 and the wireless module 46 of the camera 10 is two-way. Similarly, the data communication between the USB receiver 12 and the USB terminal/plug 14 of the computer system 16 is also two-way.

In a second embodiment of a monitoring system according to the present invention, and as shown in Fig. 4, the USB receiver 12 may be in wireless data communication with a plurality of digital wireless cameras 10a, 10b, ... 10c, 10d. The one camera 10a, 10b, ... 10c, 10d which is in communication with the USB receiver 12 at any one time may be selected by the mobile client 22, the client 18 or at the computer system 16. The relevant instructions are transmitted to the USB receiver 12 *via* the USB terminal/plug 14, whereby the USB receiver 12 selects the one camera 10a, 10b, ... 10c, 10d which it is to be in communication with until new instructions arrive. Alternatively, the USB receiver 12 may be connected with all the digital wireless cameras 10a, 10b, ... 10c, 10d by a time slot scheme, i.e. the USB receiver 12 is in wireless data communication with the digital wireless cameras 10a, 10b, ... 10c, 10d consecutively, each for a predetermined period of time, which may be the same or different. The client 18 or mobile client 22 may thus remotely monitor the situation in at least two locations.

It can be seen that a monitoring apparatus and system according to the present invention can function satisfactorily even if the computer system 16 is positioned fairly distant from the camera 10, 10a, 10b, 10c, 10d and not even in a line of sight. This makes the whole apparatus and system more versatile and can be used in almost all environments.

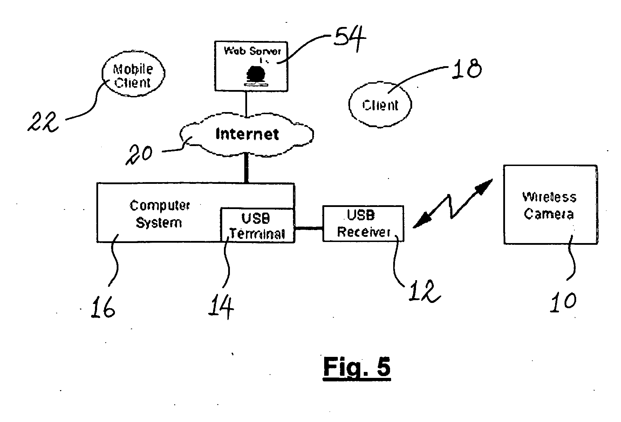

There are basically two ways in which the computer system 16 of the monitoring system according to the first and second embodiments of the present invention, as discussed and shown above, may be connected with and communicates with the client 18 and the mobile client 22 *via* the Internet. In a first way, using the first embodiment as shown in Fig. 1 as an example, and as shown in Fig. 5, a web server 54 is provided, either by the present applicant or by its customer(s), which the computer system 16, the client 18 and the mobile client 22 are all connectable *via* the Internet 20. By way of such an arrangement, relevant data may be uploaded/transferred by the computer system 16 to the server 54 *via* the Internet 20, to be accessed and obtained by the client 18 and mobile client 22, again *via* the Internet. Similarly, the client 18 and the mobile client 22 may also transmit signals/instructions to the web server 54 *via* the Internet 20, to be transferred to the computer system 16, for onward transmission, *via* the USB receiver 12, to the wireless camera 10, for appropriate action.

A second way in which the computer system 16 of the monitoring system according to the first and second embodiments of the present invention may be connected with and communicates with the client 18 and the mobile client 22 *via* the Internet is by instant messaging (IM). Simply stated, IM is a form of real-time communication between two or more people based on typed text. The text is conveyed *via* devices connected over a network, such as the Internet. In certain cases, IM involves additional features. For example, users can see each other by using cameras, or talk directly for free over the Internet using a microphone and loudspeakers. In the present invention, each of the client computer system 16, client 18 and mobile client 22 is installed with a same IM program/software allowing them to communicate with each other by a same IM service, such as ICQ, Skype Windows® Live Messenger (MSN Messenger), QQ, etc. Such an arrangement also allows, on the other hand, data from the computer system 16 to be obtained over the Internet by the client 18 and mobile client 22, and, on the other hand, instructions/signals from the client 18 and mobile client 22 to be transferred to the computer system 16 over the Internet, for onward transmission, *via* the USB receiver 12, to the wireless camera 10, for appropriate action.

It should be understood that the above only illustrates examples whereby the present invention may be carried out, and that various modifications and/or alterations may be made thereto without departing from the spirit of the invention.

It should also be understood that certain features of the invention, which are, for clarity, described in the context of separate embodiments, may be provided in combination in a single embodiment. Conversely, various features of the invention which are, for brevity, described in the context of a single embodiment, may also be provided separately or in any appropriate sub-combinations.

## Claims

1. A monitoring apparatus including:
at least one image capturing unit (30) for capturing at least one image and converting said at least one image into visual data;
at least a first data processing unit (48) for processing said visual data; and
at least a first wireless unit (46) for wirelessly transmitting data processed by said first data processing unit;
**characterized in** including at least one wireless universal serial bus (USB) receiver (12) connectable with a USB terminal (14) of a data processing apparatus (16) for data communication, and that said wireless USB receiver is adapted to wirelessly receive data transmitted by said first wireless unit (46).

2. A monitoring apparatus according to Claim 1 further **characterized in that** said image capturing unit, said first data processing unit and said first wireless unit are comprised in at least one wireless camera (10).

3. A monitoring apparatus according to Claim 1 or 2 further **characterized in that** said first wireless unit is adapted to modulate data from said data processing unit by a digital modulation method or analog modulation method.

4. A monitoring apparatus according to any of the preceding claims further **characterized in** including a sound capturing unit (34) for capturing sound, and that said first data processing unit is adapted to convert said captured sound into digital audio data.

5. A monitoring apparatus according to any of the preceding claims further **characterized in** including a night light unit (40).

6. A monitoring apparatus according to any of the preceding claims further **characterized in** including a night vision unit (42).

7. A monitoring apparatus according to any of the preceding claims further **characterized in** including a temperature detecting unit (36) for detecting the ambient temperature.

8. A monitoring apparatus according to any of the preceding claims further **characterized in** including a humidity detecting unit (44) for detecting the humidity of the surrounding atmosphere.

9. A monitoring apparatus according to any of the preceding claims further **characterized in that** said at least one wireless USB receiver includes a second wireless unit (26) for wirelessly receiving data from said first wireless unit and a second data processing unit (28) for processing said wirelessly received data.

10. A monitoring apparatus according to any of the preceding claims further **characterized in that** said USB receiver is adapted to wirelessly transmit data and that said first wireless unit is adapted to receive said data wirelessly transmitted by said USB receiver.

11. A monitoring apparatus according to any of the preceding claims further **characterized in that** said at least one USB receiver is connectable with said USB terminal of said data processing apparatus for two-way data communication.

12. A monitoring system including:
at least one monitoring apparatus according to any of the preceding claims; and
at least a first data processing apparatus (16) with Internet connection capability and with at least one universal serial bus (USB) terminal (14);
**characterized in that** said at least one wireless USB receiver is connected with said USB terminal of said first data processing apparatus for data communication.

13. A monitoring system according to Claim 12 further **characterized in** including a plurality of said monitoring apparatus (10a, 10b, ... 10c, 10d).

14. A monitoring system according to Claim 12 or 13 further **characterized in** including at least a second data processing apparatus with Internet connection capability.

15. A monitoring system according to any one of Claims 12 to 14 further **characterized in that** said at least one wireless USB receiver is connected with said USB terminal of said first data processing apparatus for two-way data communication.

16. A monitoring system according to any one of Claims 12 to 15 further **characterized in** including a web server (54) with which said first data processing apparatus is connectable *via* the Internet.

17. A monitoring system according to Claim 16 further **characterized in that** said first data processing apparatus is adapted to transfer data to said web server *via* the Internet.

18. A monitoring system according to Claim 16 or 17 further **characterized in that** said first data processing apparatus is adapted to receive signals and/or instructions from said web server *via* the Internet.

19. A monitoring system according to Claim 17 or 18 further **characterized in** including at least a second data processing apparatus with Internet connection capability and adapted to connect, *via* the Internet, with said web server to obtain said data transferred by said first data processing apparatus to said web server.

20. A monitoring system according to Claim 19 further **characterized in that** said second data processing apparatus is adapted to transmit signals/instructions to the web server *via* the Internet.

21. A monitoring system according to Claim 14 or 15 further **characterized in that** each of said first and second data processing apparatus is installed with a same instant messaging program/software allowing them to communicate with each other *via* a same instant messaging service.

22. A monitoring method, including:
(a) capturing at least one image of a location, object or individual;
(b) converting said image into visual data;
(c) processing said visual data; and
(d) wirelessly transmitting said data after being processed in said step (c);
**characterized in** (e) wirelessly receiving said data by a wireless universal serial bus (USB) receiver (12) connected with a USB terminal (14) of a first data processing apparatus (16) for data communication.

23. A method according to Claim 22 including (f) said first data processing apparatus receiving said data from said wireless USB receiver and (g) said first data processing apparatus transmitting said data to a second data processing apparatus (18, 22) *via* the Internet (20).
